# EUROPEAN PATENT APPLICATION

(11) **EP 3 159 090 A1**
(43) Date of publication of application: **26.04.2017**
(21) Application number: 15191071.8
(22) Date of filing: 22.10.2015
(51) Int. Cl.: B23D 77/02, B23D 77/00

(54) **CUTTING TOOL AND CUTTING INSERT**

(71) Applicant: Seco Tools AB, 737 82 Fagersta (SE)
(72) Inventor: RIMET, Lilian, 38 160 Saint Sauveur (FR)
(74) Representative: Jedlöv, Cecilia

(57) **Abstract**

A reaming tool (21; 21') having a diameter (D) and an axis of rotation (AR) and comprising a tool holder body (43; 43') and at least one one-piece indexable reaming insert (23). The reaming insert comprises more than one cutting edge (25A, 25B). The tool holder body has an insert clamp (47) for clamping the reaming insert relative to the tool holder body. The cutting edge extends beyond a periphery of the tool holder body when the reaming insert is clamped relative to an abutment surface (31) of the tool holder body. The reaming insert comprises a head (27) and an integral mounting portion (33), the tool holder body having an opening (45) in which the integral mounting portion of the cutting insert is disposed. A reaming insert for a tool is also disclosed.

## Description

### BACKGROUND AND SUMMARY

The present invention relates generally to cutting tools and, more particularly to reaming tools.

In most cutting tools having replaceable cutting inserts, a cutting insert is mounted in an insert seat in a tool holder body and is clamped to an abutment surface by a clamping means such as a screw extending through a hole in the cutting insert into an internally threaded hole in the tool holder body or in an intermediate structure that is itself clamped to a surface formed in an insert seat formed on the tool holder body such as in WO 2008/121055 A1. In either event, design of a tool holder body is complicated when it is desired to position the cutting insert so that a working cutting edge of the cutting insert defines a certain angle with a longitudinal axis of the tool holder body, and so that rake and relief surfaces of the cutting insert are properly oriented relative to the tool holder body. The finished tool holder body generally has a single function such as, for rotating tools, for example, being adapted to ream a bore having a particular diameter. Handling of clamping means is complicated and time consuming, especially for small tool diameters such as below 11.95 mm.

It is desirable to provide a cutting tool in which the design and machining of the tool holder body can be simplified. It is also desirable to provide a cutting tool that can ream smaller holes than conventional reaming tools having indexable inserts, such as hole diameters less than 11.95 mm. It is also desirable to provide a cutting tool and insert that facilitate indexing or change of a worn insert.

In accordance with an aspect of the present invention, a cutting tool has a diameter and an axis of rotation, the cutting tool comprising a tool holder body and at least one one-piece indexable cutting insert, the cutting insert comprising more than one cutting edge, the tool holder body having an insert clamp for clamping the cutting insert relative to the tool holder body, the cutting edge extending beyond a periphery of the tool holder body when the cutting insert is clamped relative to an abutment surface of the tool holder body, wherein the cutting insert comprises a head and an integral mounting portion and the tool holder body has an opening in which the integral mounting portion of the cutting insert is disposed. This tool construction improves handling of cutting tools generally.

According to another aspect of the present invention, the length of the integral mounting portion is at least 50% of the tool diameter to increase stability of the machining process.

According to another aspect of the present invention, a longitudinal axis of the integral mounting portion is perpendicular or substantially perpendicular to the axis of rotation of the tool to improve the tool accuracy and facilitate adjustment of the cutting insert.

According to another aspect of the present invention, the longitudinal axis of the integral mounting portion intersects or substantially intersects the axis of rotation of the tool to maintain tool body stability.

According to another aspect of the present invention, a free end of the integral mounting portion abuts an adjustably movable surface in the opening to facilitate radial adjustment of the cutting insert.

According to another aspect of the present invention, the free end of the integral mounting portion is convexly V-shaped and forms two chamfers, each forming an internal acute angle with a plane containing the longitudinal axis of the integral mounting portion making an inclined abutment possible in order to save space.

According to another aspect of the present invention, the tool holder body comprises an abutment surface for preventing rotation of the cutting insert relative to the tool holder body.

According to another aspect of the present invention, a body channel extends at least partially through the tool holder body and adapted to direct fluid medium towards the cutting insert, when the cutting insert is mounted in the tool holder body to flush away chips and cool the cutting insert.

In accordance with yet another aspect of the present invention, a cutting insert for a cutting tool comprises a one-piece indexable cutting insert, the cutting insert comprising a head, having a median plane and more than one cutting edge at an intersection of a rake face and a clearance surface, an integral mounting portion having a longitudinal axis and being connected to the head, wherein the median plane is perpendicular or substantially perpendicular to the longitudinal axis and wherein the longitudinal axis intersects the clearance surface.

According to another aspect of the present invention, the head has at least two cutting edges, on a side of the cutting insert containing the clearance surface facing away from the mounting portion, which can be indexed to at least two positions by being turned over 90 or 180° about the longitudinal axis that is economically beneficial.

According to another aspect of the present invention, the head has a length which is 1.5 to 4.0 greater than a dimension such as a diameter of the integral mounting portion, measured perpendicular to the axis AC, for optimal use of the insert material.

According to another aspect of the present invention, the cutting edge partly back tapers at an angle relative to a plane perpendicular to the longitudinal axis. The back taper of the cutting edge is made in order to overcome causing oversize and torn holes.

According to another aspect of the present invention, a free end of the integral mounting portion comprises one or more stop surfaces suitable for defining a radial position of the cutting insert.

According to another aspect of the present invention, the free end of the integral mounting portion is convexly V-shaped and forms two chamfers, each forming an internal acute angle with a plane containing the longitudinal axis of the integral mounting portion making an inclined abutment possible in order to save space.

According to another aspect of the present invention, the integral mounting portion is of circular or non-circular cross-sectional shape.

### BRIEF DESCRIPTION OF THE DRAWINGS

The features and advantages of the present invention are well understood by reading the following detailed description in conjunction with the drawings in which like reference numerals indicate similar elements and in which:
FIG. 1A is a side view of a reaming tool according to an embodiment of the present invention; FIG. 1B is a magnified side view of the reaming tool; FIG. 1C is an end view in phantom of the reaming tool; FIG. 1D is a cross-sectional view according to line D-D shown in FIG. 1 B;
FIG. 2A is a side view of a reaming tool according to another embodiment of the present invention; FIG. 2B is a perspective, partially exploded view of the reaming tool shown in FIG. 2A;
FIGS. 3A and 3B are showing the cutting insert in a side view and in a perspective view, respectively, according to the present invention; FIG. 3C is a bottom view of the cutting insert; FIG. 3D is an end view of the cutting insert, and FIG. 3E is a top view of the cutting insert.

Each figure in the drawings is drawn to scale. However, sizes of the cutting tool or cutting insert maybe reduced or enlarged by a certain amount.

### DETAILED DESCRIPTION

A reaming tool 21, 21' and a cutting insert 23 according to the present invention are shown in the figures. The reaming tool 21, 21' comprises the cutting insert 23 and a tool holder body 43, 43'. The reaming tools 21,21' are identical or substantially identical except for the manner in which fluid is transported in respective tool holder body.

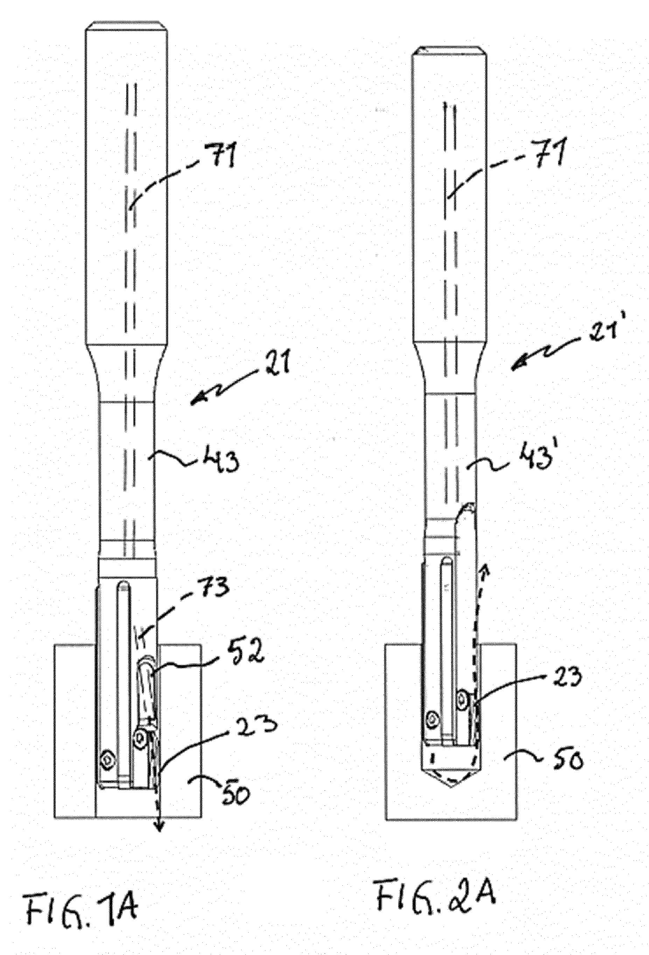

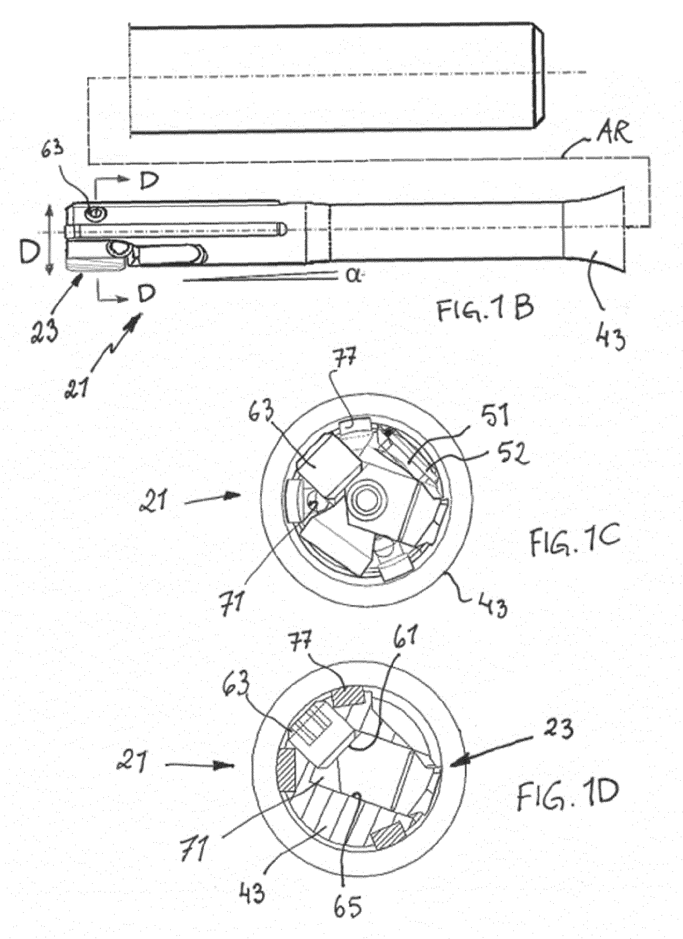

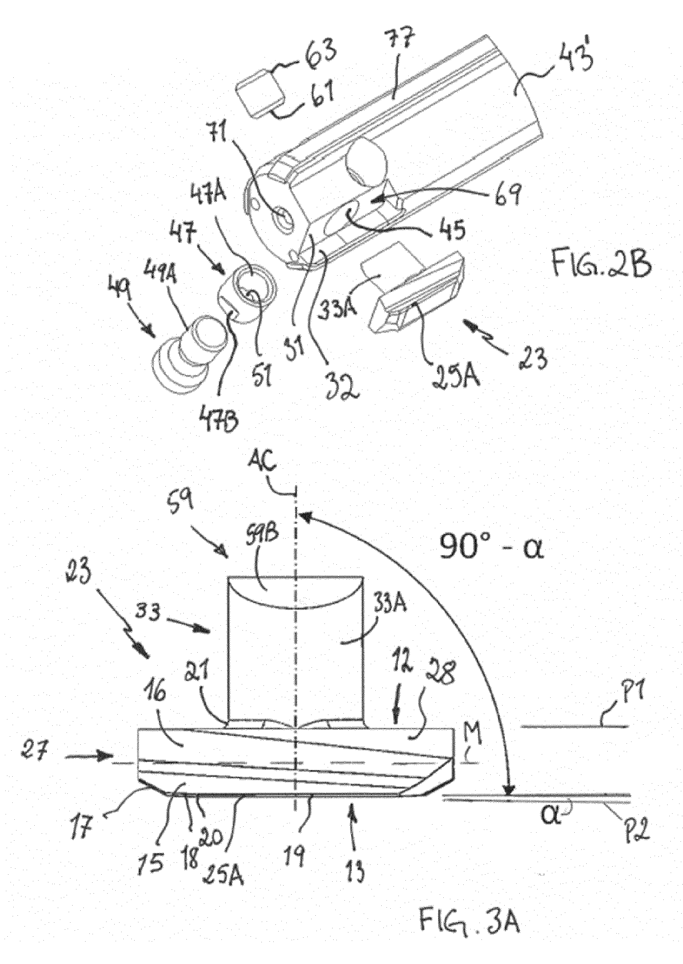

The reaming tool 21 shown in FIGS. 1A-1D is particularly suitable to ream through-holes in a workpiece 50 and allow a fluid jet to directly flush the active cutting edge as illustrated by the dotted arrow in FIG. 1A. A body channel 71 (shown in phantom) can be provided to extend at least partially through a tool holder body 43, and a branch channel 73 (shown in phantom) can be provided in the tool holder body and exit via an opening 51 below a cover plate 52. The body channel 71 and the branch channel 73 can be in flow communication when the cutting insert 127 is mounted in the tool holder body 14 and can be used, for example, for introducing flushing/lubricating/cooling fluid to the workpiece. The reaming tool 21' shown in FIGS. 2A and 2B is particularly suitable to ream blind holes in a workpiece 50 and allow a fluid jet to indirectly flush the active cutting edge by flowing from one or more exits at a free end of the tool holder body 43' to hit the blind hole bottom and deflect past the cutting insert as illustrated by the dotted arrow in FIG. 2A.

Ordinarily, the tool 21, 21' has an insert seat formed in the tool holder body 43, 43' to receive the cutting insert 23 and walls of the insert seat form possible abutment surfaces 31, 32.

The cutting insert has a cutting edge 25A, 25B at an intersection of a rake face 15 and a clearance surface 13. The cutting insert 23 is indexable, meaning that it can be moved to two different positions relative to the tool holder body 43 to expose a different cutting edge 25A, 25B. The cutting insert has two cutting edges 25A, 25B on the same side of the cutting insert and can be indexed to two positions.

The tools illustrated in the figures are reaming tools, however, it will be appreciated that the present invention is not necessarily limited to applications involving reaming tools, and can have application in all manner of rotating tools. It should be noted that in FIG. 1D a screw 63 and the cutting insert are not sectioned.

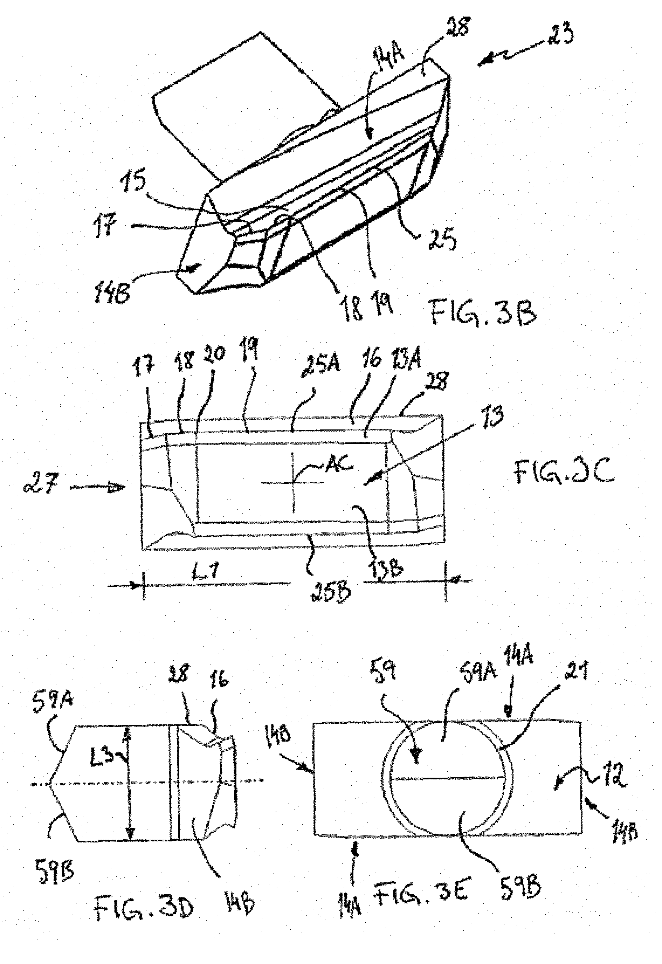

The cutting insert 23 is developed to be used foremost for machining of metallic workpieces. The cutting insert 23 comprises a plate or head 27 of for example rectangular or square basic shape, and an integral mounting portion or stem 33 having a longitudinal axis AC. The cutting insert may be T-shaped when seen in a side view as in FIG. 3A held upside down, and the integral mounting portion 33 may constitute a stem of the capital letter T and the head 27 may constitute an arm of the capital letter T. The cutting insert is made in one piece, a so called monobloc. The monobloc may have a cavity, aperture or channel (not shown). The cutting insert is indexable so that it can be turned over 180° about the axis **AC** to expose an additional or new cutting edge.

The head 27 has an upper surface 12 and a lower surface 13, provided in separate, for example parallel planes **P1** and **P2**, and a plurality of side surfaces 14A, 14B connecting said upper and lower surfaces. The cutting insert has a median plane **M** extending between the upper surface 12 and the lower surface 13 and extending perpendicularly or substantially perpendicularly through the axis **AC**.

The head 27 may have 1.1 to 3 times larger volume than that of the mounting portion 33 and is thus heavier than the mounting portion when parting them at plane **P1**.

The side surfaces 14A may be longer than the side surfaces 14B. Each side surface 14A comprises a rake face 15. An intersection of the lower surface 13 and the rake face 15 forms a cutting edge 25A. The cutting edge 25A and/or 25B may comprise a first chamfered edge 17, a second chamfered edge 18 and a third chamfered edge 19. Each chamfered edge 17-19 may be straight or substantially straight.

With reference to FIG. 3A the first chamfered edge 17 may form an acute angle with the median plane **M** and an obtuse angle with the second chamfered edge 18. The third chamfered edge 19 is back tapering at an angle α in the range of 1 to 5° causing the tool 21 to have a larger diameter at a forward point than rearwardly thereof. Stated another way, the cutting edge 25A, 25B may partly back taper at an angle α relative to a plane P2 perpendicular to the longitudinal axis.. The back taper of the cutting edge is made in order to overcome causing oversize and torn holes.

The hole size in the workpiece is generated by an intersection 20 between chamfered edges 18 and 19. With reference to FIG. 3C the cutting edge 25A, 25B may have its highest point situated at the intersection 20. The first chamfered edge 17 may slope from an intersection with the second chamfered edge 18. The second chamfered edge 18 and the third chamfered edge 19 may both slope from the intersection 20. The chamfered edges 17-19 may be situated in a common plane if the rake face 15 is planar.

The lower surface 13 comprises several first 13A and second 13B clearance surfaces for avoiding rubbing against the workpiece during machining. A largest second clearance surface 13B may be planar and coincide with the plane **P2**. The clearance surfaces may however be of other shapes such as concave or convex.

Chipbreaker arrangements 16 may be provided in the rake face 15 for curling the chip during machining. The chipbreaker arrangements 16 may be connected to a planar support surface 28 extending parallel to a plane containing the axis **AC** and extending along the middle of the clearance surface 13. The planar support surface 28 may be in contact with the abutment surface 32 when the cutting insert is mounted to the tool holder body.

In the preferred embodiment example, the side surfaces 14A are identical but mirror-inverted so that when the cutting insert is rotated 180° with one side surface 14A outward for machining, it has a geometry that is identical to the other side surface 14A.

The side surface 14A may be asymmetrical with respect to a plane containing the longitudinal axis **AC** with reference to FIG. 3A.

Chamfered edges 17 and 18 are cutting the material. The usual "stock allowance" or cutting depth is 0.1 to 0.3 mm in a radial direction of the workpiece hole.

The integral mounting portion or stem 33 is mounted centrally on the upper surface 12 and has a longitudinal axis **AC**. The longitudinal axis **AC** may be perpendicular or substantially perpendicular to the lower surface 13 or clearance surface. It may also be positioned perpendicular or substantially perpendicular to a longitudinal axis or an axis of rotation AR of the tool. The expression "axis of rotation" also includes "tool axis" in applications wherein the tool is stationary while the workpiece is rotating.

A length **L1** of the head 27 may be greater than a length L2 taken along the axis **AC** of the integral mounting portion 33, the latter being at least 50% of the tool diameter **D**.

The length **L1** of the head 27 may be 1.5 to 4.0 greater than a dimension **L3** such as a diameter of the integral mounting portion 33, measured perpendicular to the axis **AC**.

The tool holder body 43, 43' has an opening 45 in which the stem 33 of the cutting insert 23 is intended to be disposed. The stem 33 is integrated with the cutting insert 23 and is centrally positioned on the upper surface 12. The stem 33 may be connected to the upper surface 12 via a smooth surface, such as a radiused surface 21. The longitudinal axis **AC** intersects the clearance surface or lower surface 13. When seen in a side view according to FIG. 3A the longitudinal axis **AC** extends at about the half of the head length **L1**.

A free end 59 of the stem 33 may comprise one or more stop surfaces, such as bevels or chamfers 59A, 59B. In the shown embodiment there are two bevels 59A, 59B, i.e. one bevel to be used for each cutting edge 16. Each bevel may be planar and may be forming an acute angle with the longitudinal axis **AC**, such that the bevels form an inverted V-shape. The crest of the inverted V-shape may extend through and perpendicular to the axis **AC**. Alternatively, the stem may comprise one or more reaction surfaces within its envelope surface, such as recesses or grooves, to be acted upon by fastening means (not shown). The stem does not have to be cylindrical but may be of any non-circular cross-sectional shape (taken perpendicular to the axis **AC**), such as polygonal, oval or have a figure 8 shape (not shown). In each of the two latter cases the longest extension of the cross-section would be positioned in a direction parallel to the longitudinal axis **AR** where i.a. there is more space available for features.

An insert clamp 47 is provided for clamping the cutting insert 23 relative to the tool holder body 43, 43'. The cutting edge 25A extends beyond a periphery of the tool holder body 43 when the cutting insert 23 is clamped relative to the abutment surface 31 and/or 32 of the tool holder body. In the embodiment shown in FIGS. 1B and 2, the cutting insert clamp or clamping wedge 47 comprises a screw 49 having an external thread 49A that mates with an internal thread 47A in a hole 51 extending through the clamping wedge 47. When the screw 49 is tightened in the hole 51, the clamping wedge 47 is drawn into the hole and a flat (or non-flat) surface 47B thereof abuts a cylindrical surface 33A of the integral mounting portion 33 of the cutting insert 23 to pull the cutting insert into the tool holder body 43 and to assist in retaining the cutting insert in the cylindrical opening 45 by friction.

In the embodiments shown the tool 21, 21' is a rotatable tool and a longitudinal axis **AC** of the cutting insert 23 is perpendicular or substantially perpendicular to the longitudinal axis **AR** of the tool. In this embodiment, the mounting portion intersects the axis of rotation **AR** of the tool 21. It will be appreciated that the tool need not necessarily be a rotatable tool, that the longitudinal axis of the cutting insert need not be perpendicular to the axis of rotation of the tool, and that the longitudinal axis of the cutting insert need not intersect the axis of rotation of the tool. However, tool design operations can be simplified when such relationships are provided, as the position of the cutting insert 23 relative to the tool holder body 43 can be controlled by appropriate formation of the support surface 28 on the cutting insert 23. For example, in FIG. 2B, the support surface 28 of the cutting insert 23 is shown as defining an angle of about 0° with a plane parallel to the longitudinal axis **AC** of the cutting insert but may form non-zero angles therewith. While reference is made herein to a support surface 28 that is shown as being substantially flat and planar, it will be appreciated that the surface need not be flat and planar and can be in any suitable form, such as curved, grooved, or otherwise shaped.

The bottom end 59 of the cutting insert abuts an adjustably movable surface 61 in the cylindrical opening 45. The movable surface 61 can be part of a set screw 63 that can be screwed into an internally threaded hole 65 in the tool holder body 43, 43' on substantially the opposite side of the tool holder body from the opening 45 so the surface 61 is disposed at the bottom of the opening. By adjusting the position of the set screw 63 and the movable surface 61, the position of the cutting insert 23 relative to the tool holder body can be adjusted. Ordinarily the position of the cutting insert 23 relative to the tool holder body will be adjusted to a desired diameter for a hole to be machined in a workpiece. The bottom end 59 can be formed at an angle to a plane perpendicular to the axis AC of the mounting portion, which may be useful, for example, to provide the hole 65 in a thicker part of the tool holder body than if the hole were aligned with the axis of the mounting portion. In the tool 21 shown in FIG. 1D, the bottom end of the the mounting portion may abut a movable surface. Likewise, in the tools 21, 21' shown the free end 59 of the cutting insert 23 may abut a fixed surface.

Referring to the tool 21,21' for purposes of discussion, the tool will ordinarily be provided with one or more abutment surfaces 31 and/or 32 for aid in preventing rotation of the cutting insert 23 relative to the tool holder body 43, 43', e.g., around the axis **AC**. Ordinarily, the tool 21,21' has an insert seat 69 formed in the tool holder body 43 to receive the cutting insert 23 and walls of the insert seat form the abutment surfaces 31 and 32. Often there is or will become a gap between the abutment surface 31 and the upper surface 12 during adjustment of the cutting insert. The cutting insert will then contact the insert seat via the support surface 28 and the abutment surface 32. However, in a cutting tool without adjustment possibilities, such as without set screws, the cutting insert may abut the abutment surface 31.

The reaming tool 21,21' is also shown with reference pads 77 to assist in ensuring proper positioning of the reaming tool and its insert(s) by avoiding excessively large circumferential distances between cutting edges.

While the present invention has been described primarily in conjunction with rotating tools, such as drilling, boring, and milling tools, it will be appreciated that the present invention has other applications, as well, such as in conjunction with other forms of tools, such as turning tools.

In general, the cutting insert is formed of a material which is harder and more wear resistant as compared to the material of the tool holder body. For example, the cutting insert is typical made from cemented carbide, cermet or ultra-hard cutting materials, such as PCD or CBN. The cutting insert can be coated or uncoated. The number of insert seats may vary, in this case there is one available position for a cutting insert.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such. Terms such as "upper", "lower", "top", "bottom", "forward" and "rear" refer to features as shown in the current drawings and as perceived by the skilled person. In the illustrated embodiments the "upper surface" faces the longitudinal axis **AR** and the "lower surface" faces away from the the longitudinal axis.

While this invention has been illustrated and described in accordance with a preferred embodiment, it is recognized that variations and changes may be made therein without departing from the invention as set forth in the claims.

## Claims

1. A cutting tool (21; 21') having a diameter (D) and an axis of rotation (AR) and comprising:
a tool holder body (43; 43') and at least one one-piece indexable cutting insert (23), the cutting insert comprising more than one cutting edge (25A, 25B),
the tool holder body having an insert clamp (47) for clamping the cutting insert relative to the tool holder body, the cutting edge extending beyond a periphery of the tool holder body when the cutting insert is clamped relative to an abutment surface (31, 32, 45) of the tool holder body,
**characterized in that** the cutting insert comprises a head (27) and an integral mounting portion (33), the tool holder body having an opening (45) in which the integral mounting portion of the cutting insert is disposed.

2. The cutting tool as set forth in claim 1, wherein the length of the integral mounting portion (33) is at least 50% of the tool diameter (D).

3. The cutting tool as set forth in claim 1 or 2, wherein a longitudinal axis (AC) of the integral mounting portion (33) is perpendicular or substantially perpendicular to the axis of rotation (AR) of the tool (21; 21').

4. The cutting tool as set forth in claim 3, wherein the integral mounting portion (33) intersects or substantially intersects the axis of rotation of the tool (21; 21').

5. The cutting tool as set forth anyone of the preceding claims, wherein a free end (59) of the integral mounting portion (33) abuts an adjustably movable surface (61) in the opening (45).

6. The cutting tool as set forth in claim 4 or 5, wherein the free end (59) of the integral mounting portion (33) is convexly V-shaped and forms two chamfers (59A, 59B), each forming an internal acute angle with a plane containing the longitudinal axis (AC) of the integral mounting portion (33).

7. The cutting tool as set forth in anyone of the preceding claims, wherein the tool holder body (43; 43') comprises an abutment surface (32) for preventing rotation of the cutting insert (23) relative to the tool holder body.

8. The cutting tool as set forth in anyone of the preceding claims, wherein a body channel extends at least partially through the tool holder body (43; 43') and adapted to direct fluid medium towards the cutting insert (23), when the cutting insert is mounted in the tool holder body.

9. A cutting insert for a cutting tool comprising:
a one-piece indexable cutting insert,
the cutting insert comprises a head (27), having a median plane (M) and more than one cutting edge (25A, 25B) at an intersection of a rake face (15) and a clearance surface (13), and an integral mounting portion (33) having a longitudinal axis (AC) and being connected to the head,
**characterized in that** the median plane (M) is perpendicular or substantially perpendicular to the longitudinal axis (AC) and **in that** the longitudinal axis (AC) intersects the clearance surface (13).

10. The cutting insert as set forth in claim 9, wherein the head (27) has at least two cutting edges (25A, 25B), on a side of the cutting insert containing the clearance surface (13) facing away from the mounting portion, that can be indexed to at least two positions by being turned over 90 or 180° about the longitudinal axis (AC).

11. The cutting insert as set forth in claim 9 or 10, wherein the head (27) has a length (L1) which is 1.5 to 4.0 greater than a dimension (L3) such as a diameter of the integral mounting portion (33), measured perpendicular to the axis (AC).

12. The cutting insert as set forth in claim 9 or 10, wherein the cutting edge (25) partly back tapers at an angle (α) relative to a plane (P2) perpendicular to the longitudinal axis (AC).

13. The cutting insert as set forth in claim 9, 10, 11 or 12, wherein a free end (59) of the integral mounting portion (33) comprises one or more stop surfaces (59A, 59B).

14. The cutting insert as set forth in claim 12, wherein the free end (59) of the integral mounting portion (33) is convexly V-shaped and forms two chamfers (59A, 59B), each forming an internal acute angle with a plane containing the longitudinal axis (AC) of the integral mounting portion (33).

15. The cutting insert as set forth in anyone of the claims 9-14, wherein the integral mounting portion (33) is of circular or non-circular cross-sectional shape.
